# EUROPEAN PATENT APPLICATION

(11) **EP 4 624 026 A1**
(43) Date of publication of application: **01.10.2025**
(21) Application number: 25163443.2
(22) Date of filing: 13.03.2025
(51) Int. Cl.: B01D 53/94, B01J 23/63, B01J 35/00, B01J 35/57, B01J 37/02, F01N 3/035, F01N 3/10

(54) **CATALYTIC WALL FLOW FILTER**

(30) Priority: 28.03.2024 WO PCT/CN2024/084347
(71) Applicant: Johnson Matthey Public Limited Company, London EC2V 7AD (GB); Johnson Matthey (Shanghai) Chemicals Limited, Shanghai 201613 (CN)
(72) Inventor: ANDERSEN, Paul Joseph, Wayne, 19087 (US); BENET RAJKUMAR, Brenda, Royston, SG8 5HE (GB); CLOWES, Lucy, Royston, SG8 5HE (GB); LAO, Yijie, Shanghai, 201613 (CN); QIAO, Dongsheng, Shanghai, 201613 (CN); TURNER, John David, Royston, SG8 5HE (GB); WARREN, Sarah Louise, Royston, SG8 5HE (GB)
(74) Representative: Johnson Matthey Plc

(57) **Abstract**

A catalytic wall-flow filter for exhaust gas from a gasoline engine is disclosed. The catalytic wall-flow filter comprises a wall-flow filter substrate, a first TWC washcoat extending from the first face and comprising a first PGM composition, a first oxygen storage capacity (OSC) material, and a first inorganic support; and a second TWC washcoat extending from the second face and comprising a second PGM composition, a second OSC material, and a second inorganic support. The combination of the first OSC material and the first inorganic support has a first Dv90. The combination of the second OSC material and the second inorganic support has a second Dv90. The first Dv90 is greater than the second Dv90.

## Description

### TECHNICAL FIELD

The present invention relates to a catalytic wall-flow filter suitable for use in a vehicular automobile emission treatment system, in particular an emission treatment system for a positive ignition internal combustion engine, such as a gasoline spark ignition engine. The catalytic wall-flow filter is effective in reducing HC, CO, NOx, and particulate matter emissions.

### BACKGROUND OF THE INVENTION

Gasoline particulate filters (GPF) are an emission after-treatment technology developed to control particulate emissions from gasoline direct injection (GDI) engines.

Most early GPF applications included an uncoated GPF positioned downstream of a three-way catalyst (TWC). As the technology matured, GPFs have been coated with a three-way catalyst. See, for example, US2009/0193796A1, US2010/0239478A1, US2019/0009254A1, US 2019/0168162A1, and US 2020/0353410A1. However, the combination of the TWC washcoat on a filter body does introduce additional issues such as undue back-pressure, and there are requirements for minimum CO, NOx and HC conversion properties. In addition, there are cost considerations with a need to provide the best possible balance of performance to cost.

There is a continued need for improving technologies to effectively convert CO, NOx and HC and to reduce particulate matters in exhaust gas from a gasoline engine.

### SUMMARY OF THE INVENTION

One aspect of the present disclosure is directed to a catalytic wall-flow filter for exhaust gas from a gasoline engine, the catalytic wall-flow filter comprising:
a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
a first TWC washcoat extending from the first face and comprising a first PGM composition, a first oxygen storage capacity (OSC) material, and a first inorganic support; a second TWC washcoat extending from the second face and comprising a second PGM composition, a second OSC material, and a second inorganic support;
wherein a combination of the first OSC material and the first inorganic support has a first Dv90;
wherein a combination of the second OSC material and the second inorganic support has a second Dv90;
wherein the first Dv90 is greater than the second Dv90;
wherein the first face is an inlet face and the second face is an outlet face of the catalytic wall-flow filter.

Another aspect of the present disclosure is a method for the manufacture of a catalytic wall-flow filter for exhaust gas from a gasoline engine, the method comprising:
(i) providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
(ii) applying a first washcoat slurry comprising a first PGM composition, a first OSC material, a first inorganic support, and a solvent to the wall-flow filter substrate from the first face of the wall-flow filter substrate;
(iii) applying a second washcoat slurry comprising a second PGM composition, a second OSC material, a second inorganic support, and a solvent to the wall-flow filter substrate from the second face of wall-flow filter substrate;
(iv) calcining a washcoated substrate to form catalytic wall-flow filter,

wherein a combination of the first OSC material and the first inorganic support has a first Dv90;
wherein a combination of the second OSC material and the second inorganic support has a second Dv90; and
wherein first Dv90 is greater than the second Dv90;

Another aspect of the present disclosure is an emission treatment system for treating a flow of a combustion exhaust gas from gasoline direct injection engines, the system comprising the catalytic wall-flow filter as disclosed herein. The exhaust system can comprise additional components, such as a TWC article comprising a TWC composition applied to a honeycomb flow-through substrate and disposed either upstream or downstream of the catalytic wall-flow filter according to the invention.

According to a further aspect, the invention provides a method of treating a combustion exhaust gas from a positive ignition internal combustion engine containing oxides of nitrogen, carbon monoxide, hydrocarbons, and particulate matter, which method comprising contacting the exhaust gas with the catalytic wall-flow filter as disclosed herein.

### DETAILED DESCRIPTION OF THE INVENTION

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

One aspect of the present disclosure is directed to a catalytic wall-flow filter for exhaust gas from a gasoline engine, the catalytic wall-flow filter comprising:
a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
a first TWC washcoat extending from the first face and comprising a first PGM composition, a first OSC material, and a first inorganic support;
a second TWC washcoat extending from the second face and comprising a second PGM composition, a second OSC material, and a second inorganic support;
wherein a combination of the first OSC material and the first inorganic support has a first Dv90;
wherein a combination of the second OSC material and the second inorganic support has a second Dv90;
wherein the Dv90 is greater than the second Dv90;
wherein the first face is an inlet face and the second face is an outlet face of the catalytic wall-flow filter.

The wall-flow filter substrate can be a ceramic, e.g., silicon carbide, cordierite, aluminium nitride, silicon nitride, aluminium titanate, alumina, mullite, pollucite, or composites comprising segments of any two or more thereof. Cordierite, a magnesium aluminosilicate, and silicon carbide are particularly preferred.

The wall-flow filter substrate suitable for use in the present invention typically has a mean pore size of from 8 to 45 µm, for example, 8 to 25 µm, or 10 to 20 µm. Pore size is well known in the art and appropriate measurement techniques are known to a person skilled in the art. The wall-flow filter substrate may have a porosity of 40 to 75%, such as 45 to 70%. The mean pore size may be determined using mercury porosimetry and x-ray tomography according to conventional methods.

The catalytic wall-flow filter comprises: a first TWC washcoat extending from the first face and comprising a first PGM composition, a first OSC material, and a first inorganic support; and, a second TWC washcoat extending from the second face and comprising a second PGM composition, a second OSC material, and a second inorganic support;

The "PGM" as used herein refers to "platinum group metal." The term "platinum group metal" generally refers to a metal selected from the group consisting of Ru, Rh, Pd, Os, Ir and Pt.

The first PGM composition and the second PGM composition can be the same or different.

In some embodiments, the first PGM composition and the second PGM composition comprises Rh and Pt.

In some embodiments, the first PGM composition and the second PGM composition are free of Pd.

"Oxygen storage capacity" refers to the ability of materials used as oxygen storage capacity material in a catalyst composition to store oxygen at lean conditions and to release it at rich conditions.

The first OSC material and the second OSC material can be the same or different. The first OSC material and the second OSC material can each be a ceria, a mixed oxide comprising ceria, or a composite oxide comprising ceria. The first OSC material and the second OSC material each may comprise a mixed oxide of cerium, zirconium; a mixed oxide of cerium, zirconium, and aluminium; a mixed oxide of cerium, zirconium, and neodymium; or a mixed oxide of cerium, zirconium and praseodymium. The term "mixed oxide" as used herein generally refers to a mixture of oxides in a single phase, as is conventionally known in the art.

The amount of the OSC material in the first TWC washcoat or the second TWC washcoat can each be from 5 to 90 wt%, or from 10 to 80 wt%, relative to the total weight of the washcoat.

The first inorganic oxide support and the second inorganic oxide support can each be an oxide of Groups 2, 3, 4, 5, 13 and 14 elements. The inorganic oxide support is generally a refractory oxide that exhibits chemical and physical stability at high temperatures, such as the temperatures associated with gasoline engine exhaust. The first inorganic oxide support and the second inorganic oxide support can each be selected from the group consisting of alumina, silica, titania, and mixed oxides or composite oxides thereof. In some embodiments, the inorganic oxide support is an alumina.

The inorganic oxide support such as alumina can be doped with a dopant. The dopant can be selected from the group consisting of La, Sr, Si, Ba, Y, Pr, Nd, Ce, and mixtures thereof. Preferably, the dopant is La, Ba, or Ce. In some embodiments, the dopant is La. The dopant content in the inorganic oxide support can be from 1 to 30 wt%, from 2 to 25 wt%, or from 3 to 20 wt%.

In some embodiments, the first inorganic oxide support and/or the second inorganic oxide support is an alumina doped with La in an amount of from 2 to 25 wt%, or from 3 to 20 wt%.

A combination of the first OSC material and the first inorganic support has a first Dv90. A combination of the second OSC material and the second inorganic support has a second Dv90.

Dv90 values of the combination of the OSC material and/or the inorganic support can be obtained by Laser Diffraction Particle Size Analysis using a Malvern Mastersizer 3000, which is a volume-based technique and applies a mathematical Mie theory model to determine Dv90. The laser diffraction analysis works by determining diameters for the particles based on a spherical approximation. For the particle size measurements by Laser Diffraction Particle Size Analysis, diluted samples were prepared by sonication in distilled water without surfactant for 30 seconds at 35 watts. Dv90 indicates that 90% volume of particles have diameters smaller than the value and 10% volume of particles have diameters greater than the value. For example, a Dv90 of 100 microns means that 90% volume of the particles are smaller than 100 microns in diameter and 10% volume of the particles are greater than 100 microns in diameter. Similarly, a Dv50 of 100 microns means that 50% volume of the particles are smaller than 100 microns in diameter and 50% volume of the particles are greater than 100 microns in diameter. A Dv10 of 100 microns means that 10% volume of the particles are smaller than 100 microns in diameter and 90% volume of the particles are greater than 100 microns in diameter. By knowing a Dv10 and a Dv90, the range of particles in a distribution of particles can be defined. The characterization of the particle size of a sample by its D10 and D90 values generally defines the breadth of the particle-size distribution. The closer these values are, the narrower the distribution of particle sizes.

The first Dv90 is greater than the second Dv90.

The combination of the first OSC material and the first inorganic support may have a first Dv90 of between 6 and 20 µm, between 8 and 16 µm, or between 10 and 14 µm.

In some embodiment, the first OSC material has a Dv90 of between 6 and 20 µm, between 8 and 16 µm, or between 10 and 14 µm.

In some embodiment, the first inorganic support has a Dv90 of between 6 and 20 µm, between 8 and 16 µm, or between 10 and 14 µm.

The combination of the second OSC material and the second inorganic support may have a second Dv90 of between 3 and 10 µm, between 4 and 9 µm, or between 5 and 8 µm.

In some embodiment, the second OSC material has a Dv90 of between 3 and 10 µm, between 4 and 9 µm, or between 5 and 8 µm.

In some embodiment, the second inorganic support has a Dv90 of between 3 and 10 µm, between 4 and 9 µm, or between 5 and 8 µm.

The Dv50 of the combination of the first OSC material and the first inorganic support can be between 2 and 10 µm, between 3 and 9 µm, and between 4 and 8 µm.

In some embodiment, the first OSC material has a Dv50 of between 2 and 10 µm, between 3 and 9 µm, and between 4 and 8 µm.

In some embodiment, the first inorganic support has a Dv50 of between 2 and 10 µm, between 3 and 9 µm, and between 4 and 8 µm.

The Dv50 of the combination of the second OSC material and the second inorganic support can be between 0.5 and 6 µm, between 1 and 5 µm, or between 2 and 4 µm.

In some embodiment, the second OSC material has a Dv50 of between 0.5 and 6 µm, between 1 and 5 µm, or between 2 and 4 µm.

In some embodiment, the second inorganic support has a Dv50 of between 0.5 and 6 µm, between 1 and 5 µm, or between 2 and 4 µm.

In some embodiments, the wall-flow filter substrate has a mean pore diameter of between 10 and 20; the Dv50 of the combination of the first OSC material and the first inorganic support is between 4 and 8 µm; and the Dv50 of the combination of the second OSC material and the second inorganic support is between 2 and 4 µm.

The OSC material and the inorganic oxide support in the first TWC washcoat or in the second TWC washcoat can have a weight ratio of from 10:1 to 1:10, from 5:1 to 1:5, or from 3:1 to 1:3.

The first TWC washcoat may cover from 10% to 90%, or from 20 to 80% the length of the first plurality of channels.

The second TWC washcoat may cover from 10% to 90%, or from 20 to 80% the length of the second plurality of channels.

In some embodiments, the first TWC washcoat covers from 30 to 70% the length of the first plurality of channels, and the second TWC washcoat covers from 70% to 30% the length of the second plurality of channels.

In some embodiments, the first TWC washcoat covers about 40% the length of the first plurality of channels, and the second TWC washcoat covers about 60% the length of the second plurality of channels.

The first TWC washcoat loading can be in the range of from 40 to 100 g/L, or from 60 to 90 g/L. The first TWC washcoat loading is defined as the weight of the first TWC washcoat relative to the total volume of the wall-flow filter after calcination.

The second TWC washcoat loading can be in the range of from 50 to 150 g/L, or from 90 to 110 g/L. The second TWC washcoat loading is defined as the weight of the second TWC washcoat relative to the total volume of the wall-flow filter after calcination.

The first TWC washcoat and the second TWC washcoat may each be an in-wall washcoat, an on-wall washcoat, or a combination of in-wall and on-wall washcoat.

In some embodiments, at least 30%, at least 40%, at least 50%, at least 60%, at least 70%, at least 80%, or at least 90% of the first TWC washcoat is on surfaces of the first plurality of channels. The amount of the TWC washcoat on surfaces of the channel walls relative to the amount of the TWC washcoat located within the channels walls can be determined by SEM images or other analytical methods.

In some embodiments, at least a portion of the second TWC washcoat is located on the on surfaces of the first plurality of channels.

In some embodiments, at least 10%, at least 20%, at least 30%, at least 40%, or at least 50% of the second TWC washcoat is located on surfaces of the first plurality of channels,

In some embodiments, at least a portion of the second TWC washcoat is located within the channels walls.

The first TWC washcoat and the second TWC washcoat are typically applied to the wall-flow filter substrate using a washcoat slurry. For example, the first TWC washcoat and the second TWC washcoat can be applied to the wall-flow filter substrate by spraying the slurry to the channels of the wall-flow filter substrate and/or dipping the wall-flow filter substrate in the slurry. Suitable washcoat procedures are described in, e.g., WO1999047260A1 and US20180229228A1. A first washcoat slurry is applied from the first face (the inlet face). A second washcoat slurry is applied from the second face (the outlet face).

When the second washcoat slurry is applied from the second face (the outlet face), at least a portion of the TWC washcoat slurry can penetrate the porous wall and/or go through the wall and enter the first plurality of channels under vacuum. Thus, a portion of the second TWC washcoat slurry can be coated on surfaces of the first plurality of channels.

Another aspect of the present disclosure is a method for the manufacture of a catalytic wall-flow filter for exhaust gas from a gasoline engine, the method comprising:
(i) providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
(ii) applying a first washcoat slurry comprising a first PGM composition, a first OSC material, a first inorganic support, and a solvent to the wall-flow filter substrate from the first face of the wall-flow filter substrate;
(iii) applying a second washcoat slurry comprising a second PGM composition, a second OSC material, a second inorganic support, and a solvent to the wall-flow filter substrate from the second face of wall-flow filter substrate;
(iv) calcining a washcoated substrate to form catalytic wall-flow filter,

wherein a combination of the first OSC material and the first inorganic support has a first Dv90;
wherein a combination of the second OSC material and the second inorganic support has a second Dv90; and
wherein the first Dv90 is greater than the second Dv90;

The first washcoat slurry and the second washcoat slurry generally comprise a solvent. Water and organic solvents (methanol, ethanol, propanol, and the like) or their mixtures can be used. Preferably, water is used as the solvent.

Typically the first washcoat slurry and/or the second washcoat slurry have a solid content of from 20 to 30 wt%.

The first washcoat slurry and/or the second washcoat slurry comprises a carboxylate ion. The carboxylate ion may be a member selected from the group consisting of citrate, malate, malonate, succinate, tartrate, glutarate, tartronate, oxalate, lactate, glycolate ions, and mixtures thereof. In some embodiments, the carboxylate ion is citrate and/or malonate ions. In some embodiments, the carboxylate ion is citrate ion.

The molar ratio of carboxylate ions to the PGM ions in the first washcoat slurry and/or the second washcoat slurry is from 1:1 to 50:1, from 5:1 to 25:1, or from 10:1 to 20:1.

After one or both the first washcoat slurry and the second washcoat slurry is applied to the wall-flow filter substrate, it may be preferable to dry and/or calcine the wall-flow filter substrate containing one washcoat before another washcoat is applied. Calcining may be preceded by a drying step at a lower temperature (such as 100 to 200°C). Calcining is routine in the art and may be performed under usual conditions.

Another aspect of the present disclosure is an emission treatment system for treating a flow of a combustion exhaust gas from gasoline direct injection engines, the system comprising the catalytic wall-flow filter as disclosed herein. The exhaust system can comprise additional components, such as a TWC article comprising a TWC composition applied to a honeycomb flow-through substrate and disposed either upstream or downstream of the catalytic wall-flow filter according to the invention.

In some embodiments, the exhaust system comprises a TWC article and the catalytic wall-flow filter as disclosed herein, wherein the TWC article is upstream of the catalytic wall-flow filter.

According to a further aspect, the invention provides a method of treating a combustion exhaust gas from a positive ignition internal combustion engine containing oxides of nitrogen, carbon monoxide, hydrocarbons, and particulate matter, which method comprising contacting the exhaust gas with the catalytic wall-flow filter as disclosed herein.

### EXAMPLES

### Comparative GPF-A

A washcoat slurry S-1 containing Pt and Rh supported on a cerium-zirconium mixed oxide containing about 30 wt% CeO₂ and 63 wt% ZrO₂ (Dv90 = 7 µm) and a La-stabilized alumina (Dv90 = 7 µm), citric acid (the amount of citric acid used was 100 g/ft³ relative to the substrate volume), and water was prepared. Solid content was 25.5%. The washcoat slurry S-1 was coated from both the inlet and outlet face of a cordierite wall-flow honeycomb filter substrate (132.1 mm x 101.6 mm; 300 cells per square inch; wall thickness 8 thousandths of an inch; mean pore size 15 µm; porosity 65%) using a coating procedure described in WO1999047260A1. The coating lengths on the inlet channels and the outlet channels are both about 50% of the substrate length. The coatings from the inlet face and outlet face have about 0.5-1.0 cm overlap. The coated substrate was dried at 90°C and calcined at 500°C for 45 min to produce the GPF. The GPF thus produced has a washcoat loading of 1.6 g/in³, Pt loading of 3 g/ft³, and Rh loading of 3 g/ft³. Pt loading and Rh loading refers to the weights of Pt and Rh relative to the total volume of the GPF.

### GPF-B

A washcoat slurry S-2 containing Pt and Rh supported on a cerium-zirconium mixed oxide containing about 30 wt% CeO₂ and 63 wt% ZrO₂ (Dv90 = 12 µm) and a La-stabilized alumina (Dv90 = 12 µm), citric acid (the amount of citric acid used was 100 g/ft³ relative to the substrate volume) and water was prepared. Solid content was 32%. The washcoat slurry S-2 was coated from the inlet face of a cordierite wall-flow honeycomb filter substrate (132.1 mm x 101.6 mm; 300 cells per square inch; wall thickness 8 thousandths of an inch; mean pore size 15 µm; porosity 65%) using a coating procedure described in WO1999047260A1. The coating length was about 50% of the substrate length. After it was dried at 90°C, the washcoat slurry S-1 was coated from the outlet face of the substrate for a coating length of about 50% of the substrate length. The coatings from the inlet face and outlet face have about 0.5-1.0 cm overlap. The coated substrate was dried at 90°C and calcined at 500°C for 45 min to produce the GPF. The GPF thus produced has a washcoat loading of 1.6 g/in³, Pt loading of 3 g/ft³, and Rh loading of 3 g/ft³.

### GPF-C

GPF-C was prepared in the same way as GPF-B, except that the washcoat slurry S-2 was coated from the inlet face of a cordierite wall-flow honeycomb filter substrate for a coating length of about 70% of the substrate length, and the washcoat slurry S-1 was coated from the outlet face of the substrate for a coating length of about 30% of the substrate length. The coatings from the inlet face and outlet face have about 0.5-1.0 cm overlap. The GPF thus produced has a washcoat loading of 1.6 g/in³, Pt loading of 3 g/ft³, and Rh loading of 3 g/ft³.

### GPF-D

GPF-D was prepared in the same way as GPF-B, except that the washcoat slurry S-2 was coated from the inlet face of a cordierite wall-flow honeycomb filter substrate for a coating length of about 30% of the substrate length, and the washcoat slurry S-1 was coated from the outlet face of the substrate for a coating length of about 70% of the substrate length. The coatings from the inlet face and outlet face have about 0.5-1.0 cm overlap. The GPF thus produced has a washcoat loading of 1.6 g/in³, Pt loading of 3 g/ft³, and Rh loading of 3 g/ft³.

### Cold Flow Back Pressure Test

The cold flow back pressure of the fresh GPF samples and the uncoated substrate are shown in Table 1.

**Table 1. Cold Flow Back Pressure Test**

| | Back Pressure (mbar) @ 600 m³/h |
|---|---|
| Bare filter substrate | 32.3 |
| Comparative GPF-A | 49.8 |
| GPF-B (50/50) | 52.0 |
| GPF-C (70/30) | 51.2 |
| GPF-D (30/70) | 52.1 |

### Light Off Performance and OSC Test #1: Comparative GPF-A and GPF-B

GPF samples were bench aged under 6.1-L engine with four mode aging cycle, with peak bed temperature of the front TWC brick at approximately 980°C, followed by a rear GPF brick during the aging at maximum bed temperature in the GPF of approximately 960°C. The aging duration was 150 h.

The light off performance was measured under a typical condition with the exhaust gas flow rate of 80 kg/h. The temperature ramp rate was 30°C/min. The lambda of Air and Fuel Ratio (AFR) was at 14.45. THC, CO, NOₓ conversions were calculated by comparing the compositions of the feed gas and the outlet gas.

The HC, CO and NOx T₅₀ light off temperatures (T₅₀ is the temperature when the conversion reaching 50%) of GPF samples are shown in Table 2. The data show that GPF-B gave improved light off performances for HC, CO and NOₓ. T50 of HC, CO and NOx of GPF-B are 20, 15, 16°C lower respectively as compared with those of Comparative GPF-A. The OSC testing was carried out on engine bench over the bench aged parts under testing conditions of the flow rate of 125 kg/h and catalyst inlet temperature of 550°C with Lambda amplitude 6.8% at 15 second switch. GPF-B gave higher OSC and improved light-off performance compared with Comparative GPF-A, as shown in Table 2.

**Table 2. Bench Testing Results of Light Off and OSC Over the Aged Parts**

| | T50 of CO (°C) | T50 of THC (°C) | T50 of NOx (°C) | OSC at 550 °C (mg)/pc |
|---|---|---|---|---|
| Comparative GPF-A | 440 | 433 | 414 | 157 |
| GPF-B (50/50) | 420 | 418 | 398 | 204 |

### Light Off Performance and OSC Test #2: GPF-B and GPF-C

Test #2 was performed in the same way as Test #1 except that the GPF-B and GPF-C were aged in oven (1050 °C, air) for 15 h. The test results are shown in Table 3. GPF-C and GPF-B gave similar light-off performance and OSC.

**Table 3. Bench Testing Results of Light Off and OSC Over the Aged Parts**

| | T50 of CO (°C) | T50 of THC (°C) | T50 of NOx (°C) | OSC at 550°C (mg)/pc |
|---|---|---|---|---|
| GPF-B (50/50) | 399 | 402 | 398 | 83 |
| GPF-C (70/30) | 398 | 401 | 397 | 81 |

### Light Off Performance and OSC Test #3: GPF-B and GPF-D

Test #3 was performed in the same way as Test #2. GPF-D outperforms GPF-B while the OSC of GPF-D is comparable to that of GPF-B.

### Vehicle Testing

The bench aged samples of GPF-B and Comparative GPF-A were tested over a vehicle of 1.5-liter engine with Worldwide Light Vehicles Test Cycle (WLTC) respectively, with the same aged TWC catalyst article placed in close coupled position and a GPF part placed in underfloor position in the aftertreatment system. Results of vehicle exhaust diluted bag data over those bench aged parts are shown in Table 4. GPF-B gave improved results on THC, CO and NOₓ emission control compared with Comparative GPF-A according to the vehicle testing results.

**Table 4. Emissions by Vehicle Diluted Bag Data**

| | Exhaust Emissions (mg/km) | | | |
|---|---|---|---|---|
| | THC | NMHC | CO/10 | NOₓ |
| Comparative GPF-A | 54.1 | 39.5 | 61.4 | 17.9 |
| GPF-B | 48.5 | 34.7 | 57.3 | 13.2 |

## Claims

1. A catalytic wall-flow filter for exhaust gas from a gasoline engine, the catalytic wall-flow filter comprising:
a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
a first TWC washcoat extending from the first face and comprising a first PGM composition, a first oxygen storage capacity (OSC) material, and a first inorganic support;
a second TWC washcoat extending from the second face and comprising a second PGM composition, a second OSC material, and a second inorganic support;
wherein a combination of the first OSC material and the first inorganic support has a first Dv90;
wherein a combination of the second OSC material and the second inorganic support has a second Dv90;
wherein the first Dv90 is greater than the second Dv90;
wherein the first face is an inlet face and the second face is an outlet face of the catalytic wall-flow filter.

2. The catalytic wall-flow filter of claim 1, wherein the first Dv90 is between 8 and 16 µm.

3. The catalytic wall-flow filter of any of proceeding claims, wherein the second Dv90 is between 4 and 9 µm.

4. The catalytic wall-flow filter of any of proceeding claims, wherein the wall-flow filter substrate has a mean pore diameter of between 10 and 20; wherein the first Dv90 is between 10 and 14 µm; and wherein second Dv90 is between 5 and 8 µm.

5. The catalytic wall-flow filter of any of proceeding claims, wherein at least 30% of the first TWC washcoat is on surfaces of the first plurality of channels.

6. The catalytic wall-flow filter of any of proceeding claims, wherein at least 10% of the second TWC washcoat is on surfaces of the first plurality of channels.

7. The catalytic wall-flow filter any of proceeding claims, wherein the first PGM composition comprises Rh and Pt; and wherein the second PGM composition comprises Rh and Pt.

8. The catalytic wall-flow filter of any of proceeding claims, wherein the first PGM composition is free of Pd; and wherein the second PGM composition is free of Pd.

9. The catalytic wall-flow filter of any of proceeding claims, wherein the first TWC washcoat has a washcoat loading in the range of from 40 to 100 g/L.

10. The catalytic wall-flow filter of any of proceeding claims, wherein the second TWC washcoat has a washcoat loading in the range of from 50 to 150 g/L.

11. A method for the manufacture of a catalytic wall-flow filter for exhaust gas from a gasoline engine, the method comprising:
(i) providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face;
(ii) applying a first washcoat slurry comprising a first PGM composition, a first OSC material, a first inorganic support, and a solvent to the wall-flow filter substrate from the first face of the wall-flow filter substrate;
(iii) applying a second washcoat slurry comprising a second PGM composition, a second OSC material, a second inorganic support, and a solvent to the wall-flow filter substrate from the second face of wall-flow filter substrate;
(iv) calcining a washcoated substrate to form the catalytic wall-flow filter,
wherein a combination of the first OSC material and the first inorganic support has a first Dv90;
wherein a combination of the second OSC material and the second inorganic support has a second Dv90; and
wherein the first Dv90 is greater than the second Dv90.

12. The method of claim 11, wherein the first Dv90 is between 8 and 16 µm, and wherein the second Dv90 is between 4 and 9 µm.

13. An emission treatment system for treating a flow of a combustion exhaust gas from gasoline direct injection engines, the system comprising the catalytic wall-flow filter of any of claims 1-10.

14. The emission treatment system of claim 13, further comprising a TWC article comprising a TWC composition applied to a honeycomb flow-through substrate.

15. A method of treating a combustion exhaust gas from a positive ignition internal combustion engine containing oxides of nitrogen, carbon monoxide, hydrocarbons, and particulate matter, which method comprising contacting the exhaust gas with the catalytic wall-flow filter of any of claims 1-10.
